# EUROPEAN PATENT SPECIFICATION

(11) **EP 2 720 459 B1**
(45) Date of publication and mention of the grant of the patent: **08.07.2020**
(21) Application number: 12796757.8
(22) Date of filing: 21.02.2012
(51) Int. Cl.: H04N 7/18, G06T 1/00, G06T 7/00, G08B 13/196, G08B 25/00

(54) **DISTRIBUTED IMAGE PROCESSING SYSTEM**
VERTEILTES BILDVERARBEITUNGSSYSTEM
SYSTÈME DE TRAITEMENT D'IMAGE DISTRIBUÉ

(30) Priority: 08.06.2011 JP 2011127812
(43) Date of publication of application: 16.04.2014
(73) Proprietor: Omron Corporation, Kyoto-shi, Kyoto 600-8530 (JP)
(72) Inventor: KAJITANI Koichiro, Kyoto-shi Kyoto 600-8530 (JP); NAITO Takeshi, Kyoto-shi Kyoto 600-8530 (JP); UENOYAMA Toru, Kyoto-shi Kyoto 600-8530 (JP); HASEGAWA Makoto, Kyoto-shi Kyoto 600-8530 (JP); ICHINOSE Katsuhiko, Kyoto-shi Kyoto 600-8530 (JP)
(74) Representative: Isarpatent
(86) International application number: PCT/JP2012/054068
(87) International publication number: WO 2012/169232

(56) References cited:
- JP-A- 2003 116 139
- JP-A- 2003 116 139
- JP-A- 2006 238 102
- JP-A- 2006 332 881
- JP-A- 2006 332 881
- JP-A- 2007 233 495
- JP-A- 2010 177 893
- JP-A- 2010 177 893
- JP-A- 2010 226 687
- US-A1- 2010 220 194

## Description

### TECHNICAL FIELD

The present invention relates to a distributed image processing system, in which a terminal and a server perform image processing involved in detection of an object located in a monitoring target area and detection of an attribute such as the kind or size of the detected object in a distributed manner.

### BACKGROUND ART

Conventionally, a video camera (a monitoring camera) is installed in various places such as a school and a factory in order to monitor a suspicious person or a suspicious substance (an abandoned substance). For example, in order to secure reassurance and security against the suspicious person or the suspicious substance, the video camera is installed while focusing an image capturing area of the video camera on an entrance of facilities such as the school and the factory. The suspicious person or the suspicious substance is detected by processing an image captured by the monitoring camera, or the image (a moving image) captured by the video camera is recorded.

Patent Documents 1 and 2 disclose a configuration to prevent degradation of detection accuracy of a mobile object while reducing a processing load involved in the mobile object which moves in an image capturing area of which the image is captured by the video camera. In Patent Documents 1 and 2, passage of the mobile object such as a person and a vehicle is detected by a change in brightness of a detection point set in the image capturing area of the video camera. In Patent Documents 1 and 2, when the passage of the mobile object is detected at the detection point, a digital still camera captures the image of the image capturing area, a still image of the digital still camera and the moving image of the video camera are stored only for a given time to reduce a storage capacity of the moving image. In Patent Document 2, an electronic mail to which the still image captured by the digital still camera is attached is transmitted to a portable terminal such as a mobile phone which is possessed by a security guard and the like, thereby speeding up response to the detected mobile object.

### PRIOR ART DOCUMENTS

### PATENT DOCUMENTS

Patent Document 1: Japanese Unexamined Patent Publication No. 2009-38779
Patent Document 2: Japanese Unexamined Patent Publication No. 2010-177893

US 2010/220194 A1 (ISHIKO MASATSUGU [JP] ET AL), 2 September 2010, discloses the detection of objects from an input video image irrespective of whether the different objects in the image are moving objects, non-moving objects, or human faces.

JP 2003 116139 A describes a video distribution server and video reception client system. An area division section of a camera server divides a video image into small areas and a difference processing section applies difference processing between an image and a one-preceding image of each small area.

JP 2006 332881 A describes a monitor photographing system comprising a camera apparatus for photographing a moving picture and a still picture.

### SUMMARY OF THE INVENTION

### PROBLEMS TO BE SOLVED BY THE INVENTION

However, in Patent Documents 1 and 2, the mobile object (for example, the suspicious person) can be detected, while the attribute such as a kind (for example, a person and a vehicle) or a size of the mobile object cannot be detected. In Patent Documents 1 and 2, the suspicious substance that is of the non-mobile object and the kind or size of suspicious substance are not detected.

Nowadays, because a high value is placed on the securing of the reassurance and security against terrorist act and the like, there is also demand to discover the abandoned suspicious substance or speed up response to the suspicious substance.

Although the attribute such as the kind or size of the object of which image is captured by the video camera is detected by well-known image processing such as pattern matching, it is necessary to use relatively complicated image processing in order to enhance the detection accuracy of the attribute of the object. As a result, a load increases on a device side that performs the image processing. That is, for the device that performs the image processing, it is necessary to use the device having a relatively high processing performance. On the other hand, in a relatively large facility, a plurality of monitoring target areas where the suspicious person or the suspicious substance is monitored are set, and the video camera is installed in each monitoring target area. The use of the terminal having the processing performance suitable for the image processing of the image captured by the video camera in each video camera (in each monitoring target area) increases cost of system construction.

An object of the present invention is to provide a distributed image processing system that accurately detects the object located in the monitoring target area and the attribute of the object and prevents the increase in cost of the system construction.

### MEANS FOR SOLVING THE PROBLEM

A distributed image processing system according to the present invention has the following configuration in order to solve the problem to achieve the object.

The scope of the present invention is defined by the appended claims. The alternatives and/or examples discussed the following description which are not covered by the appended claims are to be considered as not being part of the present invention.

The distributed image processing according to the invention is defined in independent claim 1.

A first camera is connected to the terminal. The first camera inputs a captured moving image of a monitoring target area to a moving image input unit of the terminal. In the terminal, a simple image processor processes the moving image input to the moving image input unit, and detects an object of which an image is captured. The simple image processor only has to detect whether the object of which the image is captured is present, but the simple image processor need not to detect an attribute such as a kind or a size of the object. For example, the simple image processor generates a difference image between a frame image of the moving image input to the moving image input unit and a background image of the monitoring target area, and detects whether the object is present based on the difference image. That is, the simple image processor performs image processing having a small processing load. When the simple image processor detects the object, the still image transmitting unit transmits the still image in which the detected object is captured to the server.

In the server, an image processor processes the still image transmitted from the terminal, and detects an attribute of the object of which the still image is captured. The image processor detects the kind of the object of which the still image is captured through pattern matching, and performs recognition processing according to the kind of the detected object. For example, when the detected object is the suspicious person, the attribute such as sexuality and age of the suspicious person is detected by face recognition, and when the detected object is the vehicle, a license plate number indicated in a license plate of the vehicle is recognized by character recognition. In the server, an output unit performs an output based on a processing result of the image processor. For example, a warning of a security office is activated to notify the security guard and the like of a processing result, or the processing result is transmitted to a portable terminal possessed by the security guard and the like through electronic mail. Therefore, the response to the detected suspicious person or suspicious substance can quickly be taken.

The terminal only has to be able to detect whether the image of the object is captured by the first camera (whether the object is present), but the terminal may not detect the attribute such as the kind or size of the object of which the image is captured, so that the image processing load involved in the detection of the object can sufficiently be reduced. The terminal transmits the image in which the object is captured to the server when the object is detected, and the terminal does not transmit the image in which the object is captured to the server when the object is not detected. Additionally, the terminal transmits not the moving image but the still image to the server. Therefore, in the terminal, because a data amount of the image transmitted to the server is also reduced, the load on the communication with the server is reduced. A traffic volume of the network that communicably connects the terminal and the server is also reduced.

Accordingly, the inexpensive terminal having low processing performance can be used without any difficulty. The object located in the monitoring target area and the attribute of the object are accurately detected on the server side. That is, the object located in the monitoring target area and the attribute of the object are accurately detected, and the increase in cost of the system construction is prevented.

The terminal includes an image capturing visual field controller configured to control an image capturing visual field of a second camera that captures the still image. As used herein, the image capturing visual field means an image capturing direction, an image capturing magnification, and the like. For example, the second camera may be attached to a panhead that turns separately in two axial directions (a pan direction and a tilt direction) orthogonal to each other, and the image capturing visual field controller may separately control turning angles of the panhead in the pan direction and the tilt direction to control the image capturing direction of the second camera. The second camera may include a zoom function, and the image capturing visual field controller may control the image capturing magnification of the second camera.

The simple image processor detects the object of which the image is captured, and detect a position of the object detected in the monitoring target area, and the image capturing visual field controller controls the image capturing visual field (such as the image capturing direction and the image capturing magnification) of the second camera based on the position of the object in the monitoring target area, the position of the object being detected by the simple image processor. Therefore, the image of the detected object isclearly captured by the second camera. The still image transmitting unit transmits the still image captured by the second camera to the server. Therefore, the server more accurately detects the attribute of the object.

In the terminal, the simple image processor detects the object of which the image is captured, and detect whether the detected object is a mobile object, and the still image transmitting unit transmits whether the detected object is a mobile object to the server together with the still image.

### EFFECT OF THE INVENTION

According to the present invention, the object located in the monitoring target area and the attribute of the object are accurately detected, and the increase in cost of the system construction is prevented.

### BRIEF DESCRIPTION OF THE DRAWINGS

Fig. 1 is a schematic diagram illustrating a configuration of a distributed image processing system.
Fig. 2 is a block diagram illustrating a configuration of a main part of an area terminal.
Fig. 3 is a block diagram illustrating a configuration of a main part of a server.
Fig. 4 is a view illustrating a relationship between an image capturing area of a video camera and an image capturing area of a digital still camera.
Fig. 5 is a flowchart illustrating operation of the area terminal.
Fig. 6 is a flowchart illustrating operation of the server.

### MODE FOR CARRYING OUT THE INVENTION

A distributed image processing system according to an embodiment of the present invention will be described below.

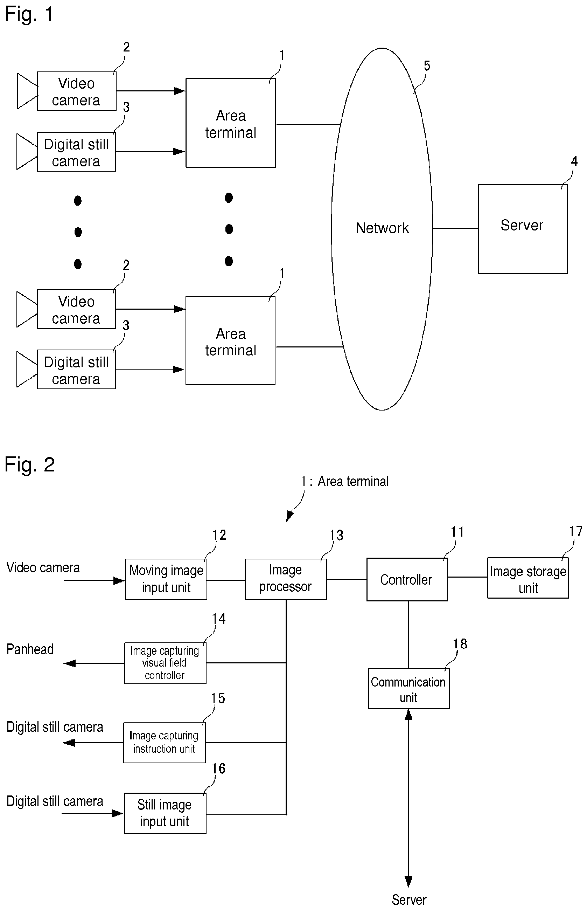

Fig. 1 is a schematic diagram illustrating a configuration of the distributed image processing system. In the distributed image processing system, an area terminal 1, a video camera 2, and a digital still camera 3 are installed in each monitoring target area where a suspicious person or an abandoned substance (a suspicious substance) is monitored. A server 4 is installed in a center. The area terminal 1 installed in each monitoring target area is communicably connected to the server 4 through a network 5.

The video camera 2 and the digital still camera 3 input a captured image to the area terminal 1. The video camera 2 is installed such that an image capturing area of the video camera 2 covers the whole monitoring target area. In other words, the image capturing area of the video camera 2 is the monitoring target area. The video camera 2 inputs a moving image (for example, the captured image of 30 frames per second) of the monitoring target area to the area terminal 1.

The digital still camera 3 is attached to a panhead (not illustrated) that turns separately in two axial directions (a pan direction and a tilt direction) orthogonal to each other. The digital still camera 3 includes a zoom function of driving an image capturing optical system to change an image capturing magnification. The digital still camera 3 captures a still image in response to an input of a release signal.

The video camera 2 corresponds to the first camera of the present invention, and the digital still camera 3 corresponds to the second camera of the present invention.

The area terminal 1 processes the image (the moving image) captured by the video camera 2, and detects whether an object of which the image is captured is present, namely, whether the object is located in the monitoring target area. When detecting the object located in the monitoring target area, the area terminal 1 focuses an image capturing visual field of the digital still camera 3 on the detected object, and inputs the release signal to the digital still camera 3. The area terminal 1 transmits the image (the still image) captured by the digital still camera 3 to the server 4 through the network 5.

The server 4 processes the still image transmitted from the area terminal 1, and detects a kind of the object of which the image is captured (namely, the object located in the monitoring target area). The server 4 performs an output according to a detection result of the object located in the monitoring target area (the object detected by the area terminal 1).

Fig. 2 is a block diagram illustrating a configuration of a main part of the area terminal. The area terminal 1 includes a controller 11, a moving image input unit 12, an image processor 13, an image capturing visual field controller 14, an image capturing instruction unit 15, a still image input unit 16, an image storage unit 17, and a communication unit 18. The controller 11 controls operation of each unit in a main body of the area terminal 1.

The moving image of the monitoring target area, which is captured by the video camera 2, is input to the moving image input unit 12. The video camera 2 inputs the captured image of 30 frames per second to the moving image input unit 12.

The image processor 13 generates a difference image between a frame image and a background image of the monitoring target area in each frame image input to the moving image input unit 12, and detects whether the image of the object (the suspicious person or the suspicious substance) located in the monitoring target area is captured from the generated difference image. According to well known techniques, the object such as the suspicious person and the suspicious substance which is located in the monitoring target area emerges in the difference image.

The image capturing visual field controller 14 controls the image capturing visual field of the digital still camera 3. Specifically, the image capturing visual field controller 14 controls separately turning angles of the pan direction and tilt direction of the panhead to which the digital still camera 3 is attached. A driving mechanism (not illustrated) that turns the panhead in the pan direction and tilt direction is provided in the panhead. That is, the image capturing visual field controller 14 controls the driving mechanism of the panhead to control the turning angles in the pan direction and tilt direction. An image capturing direction of the digital still camera 3 is changed by changing the turning angles of the panhead in the pan direction and tilt direction. The image capturing visual field controller 14 issues an instruction on the image capturing magnification to the digital still camera 3.

The image capturing instruction unit 15 inputs the release signal to the digital still camera 3.

The still image captured by the digital still camera 3 is input to the still image input unit 16.

The image storage unit 17 includes a recording medium such as a hard disk in which the moving image of the monitoring target area captured by the video camera 2, namely, the moving image input to the moving image input unit 12 is stored.

The communication unit 18 controls the communication with the server 4 through the network 5.

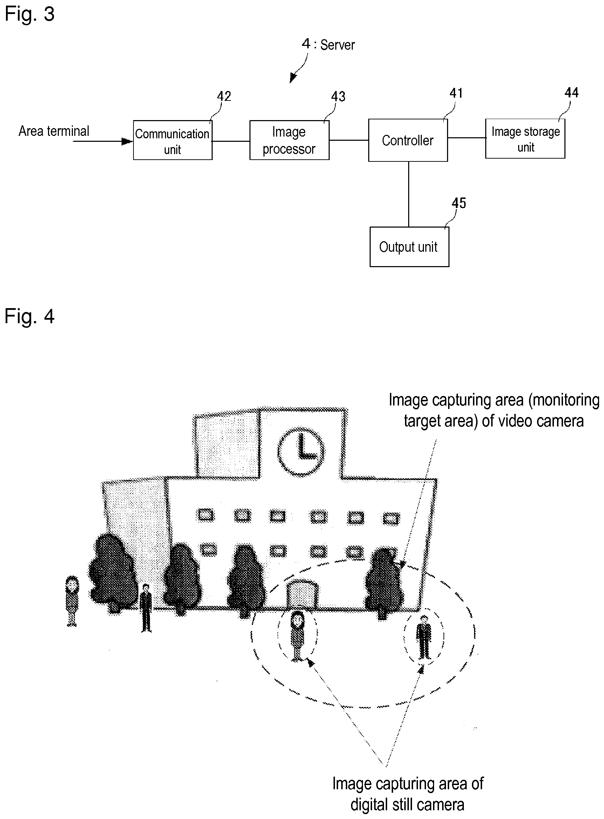

Fig. 3 is a block diagram illustrating a configuration of a main part of the server. The server 4 includes a controller 41, a communication unit 42, an image processor 43, an image storage unit 44, and an output unit 45. The controller 41 controls the operation of each unit in a main body of the server 4.

The communication unit 42 controls communication with the area terminal 1 through the network 5.

The image processor 43 processes the still image transmitted from the area terminal 1, and detects the kind of the object of which the image is captured. The image processor 43 performs image processing such as well-known pattern matching to detect the kind of the object of which the image is captured. When the detected object is a person, the image processor 43 performs face recognition processing to estimate sexuality, age, and the like. When the detected object is a vehicle, the image processor 43 performs character recognition processing to recognize a license plate number indicated in a license plate.

The still image transmitted from the area terminal 1 is stored in the image storage unit 44.

The output unit 45 performs the output based on an image processing result of the image processor 43. For example, when detecting the suspicious person or the suspicious substance, the output unit 45 notifies a standby security guard by activating a warning of a security office with the kind or size of the detected suspicious person or suspicious substance as the processing result, or transmits the processing result to a portable terminal possessed by the security guard through electronic mail.

A relationship between the image capturing area of the video camera 2 and the image capturing area of the digital still camera 3 will be described with reference to Fig. 4. As described above, the image capturing area of the video camera 2 corresponds to the monitoring target area allocated to the connected area terminal 1. The image capturing area of the video camera 2 is fixed. On the other hand, the size of the image capturing area of the digital still camera 3 can be changed by the image capturing magnification, and the digital still camera 3 can be focused on any position of the monitoring target area by changing the turning angles of the pan direction and tilt direction of the panhead to which the digital still camera 3 is attached.

The digital still camera 3 cannot simultaneously capture the images of the two image capturing areas in Fig. 4.

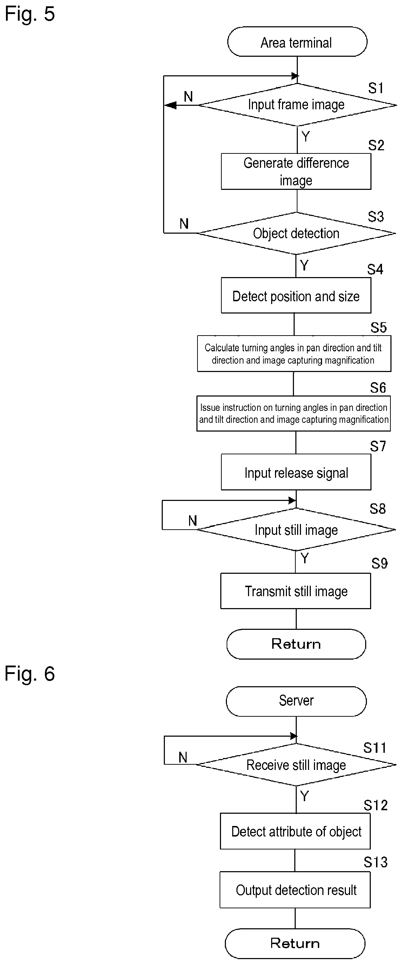

The operation of the distributed image processing system will be described with reference to Figs. 5 and 6. Fig. 5 is a flowchart illustrating the operation of the area terminal. Fig. 6 is a flowchart illustrating the operation of the server.

When the captured image (the frame image) is input from the video camera 2 to the moving image input unit 12 (S1), the area terminal 1 generates the difference image between the frame image and the background image of the monitoring target area (S2) in the image processor 13. The image processor 13 detects whether the object (the suspicious person or the suspicious substance) is located in the monitoring target area using the difference image generated in S2 (S3). The area terminal 1 returns to S1 when detecting that the object is not located in the monitoring target area in S3.

In the embodiment, the pieces of processing in S1 to S3 are performed in each frame image captured by the video camera 2. Alternatively, for example, the pieces of processing in S1 to S3 may be performed in each 5 frames or 10 frames.

If the object located in the monitoring target area is detected in S3, the area terminal 1 detects the position (the position in the monitoring target area) and size of the object (S4). The position of the object in the monitoring target area can be detected from the position of the object on the frame image. The size of the object can be detected from the size of the object on the frame image.

The image capturing visual field controller 14 calculates the turning angles in the pan direction and tilt direction of the panhead to which the digital still camera 3 is attached based on the position and size of the object detected in S4, and calculates the image capturing magnification of the digital still camera 3 (S5). In S5, the turning angles in the pan direction and tilt direction and the image capturing magnification of the digital still camera 3 are calculated such that the whole object detected in S3 falls within the image capturing visual field of the digital still camera 3.

Because it is sufficient for the digital still camera 3 to capture only the image of the detected object, not the image of the whole monitoring target area, the image capturing magnification of the digital still camera 3 can be enlarged compared with the image capturing magnification of the video camera 2. Accordingly, the image captured by the digital still camera 3 is better than the image captured by the video camera 2 in the clarity of the detected object.

The image capturing visual field controller 14 issues an instruction on the turning angles of the panhead in the pan direction and tilt direction, which are calculated in S5, to the panhead to which the digital still camera 3 is attached, and issues an instruction on the image capturing magnification to the digital still camera 3 (S6). Therefore, the panhead turns in the pan direction and the tilt direction to change the image capturing direction of the digital still camera 3. The digital still camera 3 changes the image capturing magnification in accordance with the instruction currently issued.

In the area terminal 1, the image capturing instruction unit 15 inputs the release signal to the digital still camera 3 (S7). Therefore, the digital still camera 3 captures the image in the image capturing visual field at this point, and inputs the captured still image to the still image input unit 16. As described above, the area terminal 1 focuses the digital still camera 3 on the image capturing visual field according to the position or size of the currently-detected object, so that the digital still camera 3 can obtain the still image in which the clarity of the detected object is better than that of the frame image captured by the video camera 2.

When the still image captured by the digital still camera 3 is input (S8), the area terminal 1 transmits the still image to the server 4 (S9). At this point, the area terminal 1 also transmits the object position detected in S4 and the image capturing magnification of the digital still camera 3, which is calculated in S5, to the server 4.

The area terminal 1 may always store the moving image of the monitoring target area, which is input to the moving image input unit 12 and captured by the video camera 2, in the image storage unit 17. Alternatively, in order to reduce a storage capacity of the image storage unit 17, the area terminal 1 may store the moving image of the monitoring target area, which is input to the moving image input unit 12 and captured by the video camera 2, in the image storage unit 17 for a given time period from a time at which the object is detected in S3 as a start time.

Based on the above description, in the area terminal 1, an image processing load on the image processor 13 that detects the object and a processing load of the transmission of the image to the server 4 are sufficiently reduced.

The operation of the server 4 will be described with reference to Fig. 6.

In the server 4, when the communication unit 42 receives the still image transmitted from the area terminal 1 connected through the network 5 (S11), the image processor 43 processes the currently-received still image (S12). In S12, unlike the image processor 13 of the area terminal 1, the image processing involved in the pattern matching is performed to detect the kind of the object of which the image is captured in the currently-received still image. Specifically, in the server 4, the image processor 43 detects whether the object of which the image is captured is a mobile object such as the person and the vehicle or the non-mobile object such as a bag and a suitcase through the pattern matching. In the server 4, when the detected object is the person, the image processor 43 performs the face recognition processing to estimate the sexuality, the age, and the like. In the server 4, when the detected object is the vehicle, the image processor 43 performs the character recognition processing of recognizing the license plate number indicated in the license plate of the vehicle.

In the server 4, the communication unit 42 could as well, in a system not part of the claimed invention, receive the image capturing magnification of the still image captured by the digital still camera 3 from the area terminal 1, so that the actual size of the object can be calculated from the size of the object on the still image.

Because the pattern matching, the face recognition processing, and the character recognition processing are well known, the detailed description is omitted.

In the server 4, the output unit 45 performs the output according to the detection result in S12 (S13). For example, with the kind or size of the currently-detected suspicious person or suspicious substance as the processing result, the warning of the security office is activated to notify the standby security guard and the like, or the processing result is transmitted to the portable terminal possessed by the security guard through electronic mail.

In the server 4, the still image that is transmitted from the area terminal 1 connected through the network 5 is stored in the image storage unit 44.

As described above, in the area terminal 1, the image processing load on the image processor 13 that detects the object and the processing load of the transmission of the image to the server 4 are sufficiently reduced.

The attribute of the object detected by the area terminal 1 is detected on the side of the server 4. The server 4 does not detect whether the object is present. The still image, which is used by the server 4 in order to detect the attribute of the object, is the image in which the object detected by the digital still camera 3 is clearly captured. Therefore, the server 4 can accurately detect the attribute of the object located in the monitoring target area. The area terminal 1 transmits the still image in which the detected object is captured to the server 4, but does not transmit the moving image captured by the video camera 2 to the server 4, so that a traffic volume of the network 5 can also be reduced.

Accordingly, in the distributed image processing system, the inexpensive area terminal 1 having low processing performance can be used without any difficulty. The object located in the monitoring target area and the attribute of the object can accurately be detected on the side of the server 4. Therefore, the object located in the monitoring target area and the attribute of the object can accurately be detected, and the increase in cost of the system construction can be prevented.

Alternatively, in a system not part of the claimed invention, the digital still camera 3, the panhead, and the image capturing visual field controller 14, the image capturing instruction unit 15, and the still image input unit 16 of the area terminal 1 may for example be eliminated, and the frame image in which the object detected by the area terminal 1 is captured by the video camera 2 may be transmitted as the still image to the server 4. Therefore, the processing load on the area terminal 1 can further be reduced.

The area terminal 1 may also, for example, be configured to transmit to the server 4 the frame image of the video camera 2 in which the detected object is captured and the still image of the digital still camera 3 in which the detected object is captured.

The area terminal 1 in the present invention is configured to detect whether the detected object is the mobile object or the non-mobile object, and notifies the server 4. The area terminal 1 detects whether the detected object is the mobile object or the non-mobile object based on whether the position of the object changes with time. Therefore, the server 4 performs the pattern matching of the object of which the image is captured in the still image while focusing on the mobile object or non-mobile object of which the server 4 is notified by the area terminal 1. That is, the image processing load is reduced on the side of the server 4.

### DESCRIPTION OF SYMBOLS

- 1: area terminal
- 2: video camera
- 3: digital still camera
- 4: server
- 5: network
- 11: controller
- 12: moving image input unit
- 13: image processor
- 14: image capturing visual field controller
- 15: image capturing instruction unit
- 16: still image input unit
- 17: image storage unit
- 18: communication unit
- 41: controller
- 42: communication unit
- 43: image processor
- 44: image storage unit
- 45: output unit

## Claims

1. A distributed image processing system comprising a terminal (1) and a server (4), the terminal (1) and the server (4) being communicably connected to each other, wherein
the terminal (1) comprises:
a moving image input unit (12) to which a moving image in a monitoring target area is input, the moving image being captured by a first camera (2);
a simple image processor (13) configured to process the moving image input to the moving image input unit (12), detect an object of which an image is captured and detect a position of the object in the monitoring target area, wherein the simple image processor (13) determines whether the detected object is a mobile object or a non-mobile object based on whether the detected position of the object changes with time;
an image capturing visual field controller (14) configured to control an image capturing visual field of a second camera (3) based on the position of the object in the monitoring target area detected by the simple image processor (13); and
a still image transmitting unit (18) configured to transmit to the server (4) in a form of a still image, an image captured by the second camera (3) in which the clarity of the detected object is better than in the moving image, thereby enabling a more accurate detection of the kind of the detected object, when the simple image processor (13) detects the object, and to transmit whether the detected object is a mobile object to the server together with the still image, and
the server (4) comprises:
an image processor (43) configured to process the still image transmitted from the terminal (1), based on whether the detected object is a mobile object, and detect a kind of the object of which the still image is captured; and
an output unit (45) configured to perform an output based on the kind of the object detected by the image processor (43).

2. The distributed image processing system according to claim 1, wherein, in the terminal (1), the simple image processor (13) detects the object of which the image is captured, by generating a difference image between a frame image of the moving image input to the moving image input unit (12) and a background image of the monitoring target area.

3. The distributed image processing system according to claim 1 or 2, wherein, in the server (4), the image processor (43) detects the kind of the object of which the still image is captured, through pattern matching.

## Patentansprüche

1. Verteiltes Bildverarbeitungssystem, umfassend ein Endgerät (1) und einen Server (4), wobei das Endgerät (1) und der Server (4) kommunikativ miteinander verbunden sind, wobei das Endgerät (1) umfasst:
eine Bewegtbildeingabeeinheit (12), in die ein bewegtes Bild in einem Überwachungszielbereich eingegeben wird, wobei das bewegte Bild durch eine erste Kamera (2) aufgenommen wird;
einen einfachen Bildprozessor (13), der dafür eingerichtet ist, das in die Bewegtbildeingabeeinheit (12) eingegebene Bewegtbild zu verarbeiten, ein Objekt, von dem ein Bild aufgenommen wurde, zu detektieren, und eine Position des Objekts in dem Überwachungszielbereich zu detektieren, wobei der einfache Bildprozessor (13) anhand dessen, ob sich die detektierte Position des Objekts im Lauf der Zeit ändert, bestimmt, ob das detektierte Objekt ein mobiles Objekt oder ein nicht-mobiles Objekt ist;
einen Bildaufnahme-Sichtfeld-Controller (14), der dafür eingerichtet ist, ein Bildaufnahme-Sichtfeld einer zweiten Kamera (3) auf der Grundlage der Position des Objekts in dem durch den einfachen Bildprozessor (13) detektierten Überwachungszielbereich zu steuern; und
eine Standbildübertragungseinheit (18), die dafür eingerichtet ist, ein durch die zweite Kamera (3) aufgenommenes Bild, in dem die Klarheit des detektierten Objekts besser ist als in dem bewegten Bild, in Form eines Standbildes an den Server (4) zu übertragen, wodurch eine genauere Detektion der Art des detektierten Objekts ermöglicht wird, wenn der einfache Bildprozessor (13) das Objekt detektiert, und zusammen mit dem Standbild an den Server zu übermitteln, ob das erkannte Objekt ein mobiles Objekt ist, und
der Server (4) umfasst:
einen Bildprozessor (43), der dafür eingerichtet ist, das von dem Endgerät (1) übertragene Standbild anhand dessen zu verarbeiten, ob das detektierte Objekt ein mobiles Objekt ist, und eine Art des Objekts zu detektieren, von dem das Standbild aufgenommen wurde; und
eine Ausgabeeinheit (45), die dafür eingerichtet ist, eine Ausgabe auf der Grundlage der Art des durch den Bildprozessor (43) detektierten Objekts auszuführen.

2. Verteiltes Bildverarbeitungssystem nach Anspruch 1, wobei in dem Endgerät (1) der einfache Bildprozessor (13) das Objekt, von dem das Bild aufgenommen wurde, detektiert, indem er ein Differenzbild zwischen einem Vollbild des in die Bewegtbildeingabeeinheit (12) eingegebenen Bewegtbildes und einem Hintergrundbild des Überwachungszielbereichs generiert.

3. Verteiltes Bildverarbeitungssystem nach Anspruch 1 oder 2, wobei in dem Server (4) der Bildprozessor (43) durch Mustervergleich die Art des Objekts, von dem das Standbild aufgenommen wurde, detektiert.

## Revendications

1. Système de traitement d'image distribué comprenant un terminal (1) et un serveur (4), le terminal (1) et le serveur (4) étant reliés de manière communicante l'un à l'autre, dans lequel
le terminal (1) comprend :
une unité d'entrée d'image animée (12) dans laquelle est entrée une image animée dans une zone cible de surveillance, l'image animée étant capturée par une première caméra (2);
un processeur d'image simple (13) configuré pour traiter l'image animée entrée dans l'unité d'entrée d'image animée (12), détecter un objet dont une image est capturée, et détecter une position de l'objet dans la zone cible de surveillance, dans lequel le processeur d'image simple (13) détermine si l'objet détecté est un objet mobile ou un objet non mobile sur la base du fait de savoir si la position détectée de l'objet change en fonction du temps;
un contrôleur de champ visuel de capture d'image (14) configuré pour commander un champ visuel de capture d'image d'une seconde caméra (3) sur la base de la position de l'objet dans la zone de surveillance de cible détectée par le processeur d'image simple (13); et
une unité de transmission d'image fixe (18) configurée pour transmettre au serveur (4) sous la forme d'une image fixe, une image capturée par la seconde caméra (3) dans laquelle la clarté de l'objet détecté est meilleure que dans l'image animée, permettant ainsi une détection plus précise de la nature de l'objet détecté lorsque le processeur d'image simple (13) détecte l'objet, et pour transmettre si l'objet détecté est un objet mobile au serveur en même temps que l'image fixe, et le serveur (4) comprend :
un processeur d'image (43) configuré pour traiter l'image fixe transmise à partir du terminal (1), sur la base du fait de savoir si l'objet détecté est un objet mobile, et détecter une nature de l'objet dont l'image fixe est capturée; et
une unité de sortie (45) configurée pour effectuer une sortie sur la base de la nature de l'objet détecté par le processeur d'image (43).

2. Système de traitement d'image distribué selon la revendication 1, dans lequel, dans le terminal (1), le processeur d'image simple (13) détecte l'objet dont l'image est capturée, en générant une image de différence entre une image de trame de l'image animée entrée dans l'unité d'entrée d'image animée (12) et une image d'arrière-plan de la zone cible de surveillance.

3. Système de traitement d'image distribué selon la revendication 1 ou 2, dans lequel, dans le serveur (4), le processeur d'image (43) détecte la nature de l'objet dont l'image est capturée par appariement de formes.
